# EUROPEAN PATENT APPLICATION

(11) **EP 4 471 310 A1**
(43) Date of publication of application: **04.12.2024**
(21) Application number: 23305852.8
(22) Date of filing: 30.05.2023
(51) Int. Cl.: F16L 1/16, B01D 29/27, B01D 35/02, F16L 55/24

(54) **SOLIDS CAPTURING DEVICE FOR A FLEXIBLE PIPE IMMERSED IN A BODY OF WATER, RELATED ASSEMBLY AND METHOD**

(71) Applicant: TechnipFMC Subsea France, 92400 Courbevoie (FR)
(72) Inventor: MORAND, Henri, WEST PERTH, 6005 (AU); JONES, Ashley, Michael, RIVERVALE, 6103 (AU)
(74) Representative: Lavoix

(57) **Abstract**

The device (30) comprises a connecting body (65) having at least a pipe connection member (70, 71) movable transversely relatively to a central axis (C-C') of the connecting body (65) between a released position, allowing an engagement of the connecting body (65) with an open end of a flexible pipe and a locked position, to immobilize the connecting body (65) in engagement with the open end.

The connecting body (65) defines an inner collection passage (75) to collect fluid to be released from the flexible pipe.

The device (30) comprises a filtering member (35) comprising a porous filtering wall (80) through which the fluid collected in the inner collection passage (75) has flowed or is to flow.

The connecting body (65) and/or the filtering member (35) defines at least an evacuation opening (85) to release fluid collected in the inner collection passage (75).

## Description

The present invention concerns a solids capturing device to be mounted at an open end of a fluid transportation flexible pipe immersed in a body of water.

The solids capturing device is intended to capture solids that would disperse from a flexible pipe immersed in a body of water into a body of water while the flexible pipe is being retrieved from the body of water.

The flexible pipe is in particular a part of an offshore fluid production site to be decommissioned.

The decommissioning of offshore fluid production sites after the termination of fluid production is currently a challenge for operators.

An offshore production site generally comprises fluid collection equipment located at the bottom of a body of water. Numerous fluid injection and/or production lines extend from the fluid collection equipment to the surface, to transport fluids to be injected in the ground below the bottom of the body of water and/or to collect fluids produced from the ground.

For the decommissioning, the flexible pipes are disconnected from the fluid collection equipment. The flexible pipes are then lifted with a line recovery system mounted on an offshore vessel.

The flexible pipes are retrieved using vessels and are usually stored onto reels or carousels installed on the deck of the vessel.

Alternatively, the flexible pipes may be cut into short sections. The flexible pipe sections would in this case have a length ranging from 10 m to 20 m. The pipes can then be cut offshore on the vessel or onshore at the deconstruction site.

The recovered pipes generally have been used to carry fluids for long periods of times. A production pipe generally conveys not only production fluids such as oil and gas, but also materials from the reservoirs in which the production fluids are extracted.

Most often, the solid comprises Naturally Occurring Radioactive Materials (NORM) and/or other materials. The radionuclides are thus transported along the production or injection pipes during operation. Consequently, as time elapses, materials such as scales, deposits, sand or sludge accumulate inside or on the inner layers of the production or injection pipes. These accumulated materials usually contain non-negligible levels of radionuclides.

The solid deposit can be powdery or adhere more or less weakly to the inner surface of the flexible pipe. During some recovery scenario where it is advantageous to recover flexible pipe while allowing the bore content to self-drain, the disconnection of the flexible pipe creates an open end through which weakly adherent solid particles can disperse. The flexible pipe open end can be assimilated either to a bore continuity passage through the disconnected end fitting or alternatively to a flexible pipe end that has been cut such that the bore can be accessed.

The lifting of the flexible pipe and, if any, the bending of the flexible pipe, may cause further detachment of solid particles and may lead to unwanted dispersion of solids into the sea.

However, the decommissioning of offshore oil & gas installations and especially of submarine pipelines part of said installations need to be compliant with relevant Health Safety and Environment regulations and legislations so that said installation can be decommissioned.

One aim of the invention is thus to obtain a device for a flexible pipe immersed in a body of water, this device allowing the recovery of said flexible pipe from the body of water, in particular during the decommissioning of the submarine pipelines, even if the pipe contains Naturally Occurring Radioactive Materials or other hazardous scales.

To this aim, one subject matter of the invention is a solids capturing device, characterized by:
- a connecting body configured to be detachably mounted at the open end of the flexible pipe, the connecting body having at least a pipe connection member movable transversely relatively to a central axis of the connecting body between a released position, allowing an engagement of the connecting body with the open end of the flexible pipe and a locked position, to immobilize the connecting body in engagement with the open end of the flexible pipe, the connecting body defining an inner collection passage to collect fluid to be released from the flexible pipe,
- a filtering member held by the connecting body or connected to the connecting body, the filtering member comprising a porous filtering wall through which the fluid collected in the inner collection passage has flowed or is to flow,
- the connecting body and/or the filtering member defining at least an evacuation opening to release fluid collected in the inner collection passage having flowed through the porous filtering wall.

The solids capturing device according to the invention may comprise one or more of the following feature(s), taken solely, or according to any technical feasible combination:
- the connecting body comprises an insertion region to be positioned in the flexible pipe, the inner collection passage being at least partially positioned within the insertion region and being connected to the evacuation opening, the porous filtering wall of the filtering member being formed on the insertion region or being borne by the insertion region;
- the connecting body comprises a handling region protruding from a downstream end of the insertion region, the handing region being intended to close the open end of the flexible pipe when the insertion region is positioned in the flexible pipe, the handling region defining at least a fluid release passage fluidly connected to the evacuation opening;
- the handling region comprises at least a transverse stopper located at an end of the insertion region and a peripheral collar protruding from the transverse stopper, around and radially apart from the insertion region;
- the peripheral collar comprises at least one pipe connection member, the at least one pipe connection member borne by the peripheral collar being movable radially towards the central axis from the released position to the locked position;
- the handling region comprises a handling member, in particular a pad-eye or a hook, the handling member protruding opposite the insertion region;
- the insertion region bears at least one connection member, the at least one pipe connection member borne by the insertion region being radially deployable apart from the central axis from the released position to the locked position;
- the filtering member comprises a bag shaped porous wall held or connected to the connecting body, the inner collection passage emerging in an inner volume defined by the bag shaped porous wall;
- the solids capturing device comprises a duct connecting the inner collection passage to the filtering member;
- the filtering porous wall of the filtering member is made at least partly of flexible material and the solids capturing device comprises a framework receiving the filtering member;
- the filtering porous wall of the filtering member comprises a metallic mesh or a fine screen;
- the connecting body has at least two opposite pipe connection members forming a clamp to connect around the pipe.

The invention also concerns an assembly of a flexible pipe and a solids capturing device as defined above, the connecting body being mounted at an open end of the flexible pipe, the at least one connection member being in the locked position.

Another subject matter of the invention is a method to recover a fluid transportation flexible pipe,
the method comprising:
- carrying a solids capturing device having a connecting body configured to be releasably mounted at the open end of the flexible pipe, the connecting body defining an inner collection passage to collect fluid to be released from the flexible pipe, the solids capturing device having a filtering member held by the connecting body or connected to the connecting body, the filtering member comprising a porous filtering wall through which the fluid collected in the inner collection passage has flowed or is to flow, the connecting body and/or the filtering member defining at least an evacuation opening to release fluid collected in the inner collection passage having flowed through the porous filtering wall, in the vicinity of the open end; the recovery method comprising:
   - connecting the connecting body to the open end of the flexible pipe;
   - lifting the flexible pipe with a surface recovery device;
   - letting a fluid filling the flexible pipe flow from the flexible pipe through the inner collection passage and the evacuation opening and collecting solids contained in the fluid on the porous filtering wall.

The method according to the invention may comprises the following feature:
- connecting the connecting body to the end of the flexible pipe comprises moving at least a pipe connection member transversely relatively to a central axis of the connecting body from a released position allowing an engagement of the connecting body with the open end of the flexible pipe to a locked position to immobilize the connecting body in engagement with the open end of the flexible pipe.

The invention will be better understood, based on the following description, given solely as an example, and made in reference to the appended drawings, in which:
- [Fig.1] Figure 1 is a schematic side view of a recovery vessel comprising a typical pipe recovery system lifting a flexible pipe equipped with a first solids capturing device according to the invention at its lower free end,
- [Fig.2] Figure 2 is an exploded view of an example of flexible pipe containing accumulated solids,
- [Fig.3] Figure 3 is a schematic view of the lower end of the flexible pipe onto which the first solids capturing device according to the invention is mounted,
- [Fig.4] Figure 4 is a schematic sectional view, taken along a central axial plane, of the first solids capturing device according to the invention,
- [Fig.5] Figure 5 is a side view of a flexible pipe assembled with a second solids capturing device according to the invention, and
- [Fig.6] Figure 6 is a side view of a flexible pipe assembled with a third solids capturing device according to the invention.

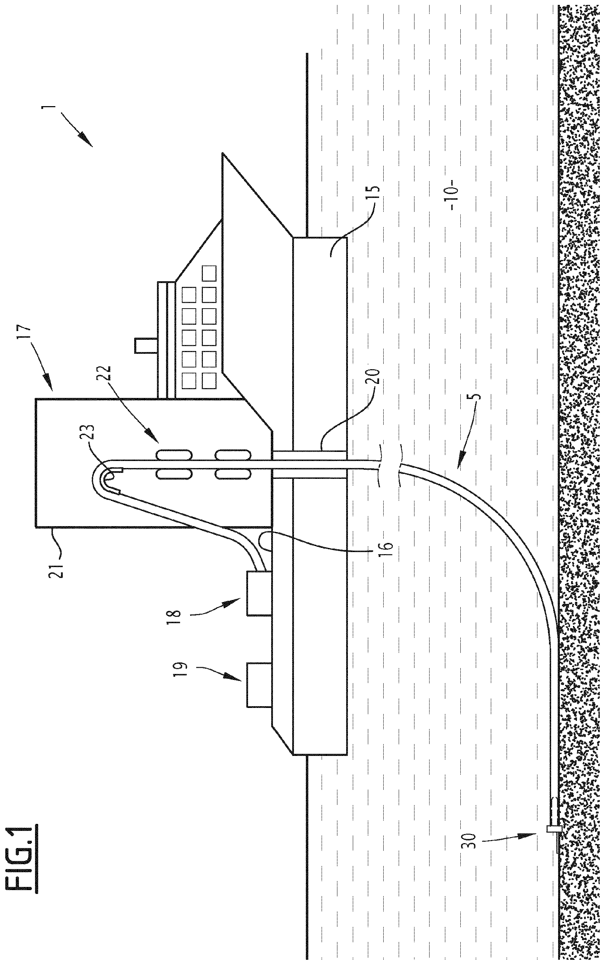

A solids capturing device 30 according to the invention is intended to be used in a flexible pipe 5 recovery method, carried out with a recovery vessel 1 shown for example in figure 1.

The recovery method is generally carried out during the decommissioning of an offshore fluid exploitation site located in a body of water 10.

The body of water 10 is for example a sea, an ocean, a lake, and/or a river. Its depth is comprised generally between 10 m and 3000 m.

Referring to Figure 1, the recovery vessel 1 is intended to recover the flexible pipe 5 immersed in the body of water 10 and partially laying on the bottom of the body of water 10.

In this example, the recovery vessel 1 is for example a ship. In variant, the recovery vessel 1 is a platform, in particular a floating platform.

The recovery vessel 1 has a hull 15, floating on the surface of the water and at least a deck 16. The recovery vessel 1 carries a pipe recovery device 17 and a pipe processing stage 18. It also has a pipe section storage 19.

In the example of figure 1, the recovery vessel 1 comprises a moon pool 20 extending vertically through the deck 16 and the hull 15 to provide a central access in the body of water 10.

The pipe recovery device 17 is configured to vertically or horizontally lift the flexible pipe 5 to bring the upper end section of the flexible pipe 5 above the deck 16 of the recovery vessel 1 and redirect it above the hull 15.

In the example of figure 1, the pipe recovery device 17 is a vertical lay system (VLS) configured to continuously lift a vertical section of the flexible pipe 5 and to redirect it towards the pipe processing stage 18 located at the deck 16 level.

The pipe recovery device 17 may comprise a tower 21 mounted on the deck 16, and at least a pair of tensioners 22 carried by the tower 21 to continuously lift the flexible pipe 5. The pipe recovery device 17 usually further comprises a redirecting mechanism 23 to bend the flexible pipe 5 at the top of the tower 21 and redirect it towards the pipe processing stage 18.

In this example, the pipe processing stage 18 comprises a pipe end working section having dividers (not shown) configured to cut or rework the pipe into pipe sections having a length advantageously comprised between 10 m and 20 m.

The pipe processing stage 18 may also comprise containers to store the pipe sections after they have been processed and a lifting device, such as a crane, configured to place at least a pipe section into a container.

Such containers are preferably configured to allow a subsequent safe transport and/or storage of pipe sections. In particular, the container can be stored in the pipe section storage 19.

In an alternative, instead of storing the pipe sections into containers, the pipe sections are rather dropped off on the deck 16 of the recovery vessel 1, in an appropriate and defined area. The pipe sections open ends are securely closed by appropriate solutions to avoid possible contamination of the deck and of the operators.

Alternatively, the recovery vessel 1 may comprises reel(s) or carrousel(s) configured to receive the flexible pipe 5 into a complete length to be further cut onshore or offshore at a separate time than the recovery.

The flexible pipe 5 is configured to transport fluids to be injected in the ground below the bottom of the body of water 10 and/or to collect fluids produced from the ground.

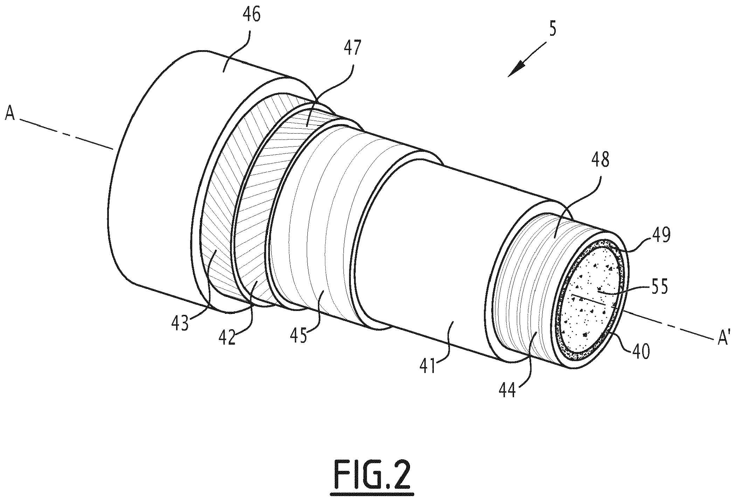

In the example shown on figure 2, the flexible pipe 5 is an unbonded flexible pipe built according with the standards API 17J (Specification for Unbonded Flexible Pipe, 4th edition - May 2014) and API RP 17B (Recommended Practice for Flexible Pipe, 5th edition - March 2014) established by the American Petroleum Institute. The flexible pipe 5 is here an unbonded pipe. At least two adjacent layers of the flexible pipe 5 are free to move longitudinally with respect to each other during flexure of the pipe 5.

Alternatively, the flexible pipe 5 is a Hybrid Flexible Pipe (HFP), in particular built according with the standards DNVGL-ST-F119 (Thermoplastic Composite Pipes, Edition September 2019) established by the DNV (Det Norske Veritas GL).

The hybrid flexible pipe 5 is here an unbonded pipe. At least two adjacent layers of the hybrid flexible pipe are free to move longitudinally with respect to each other during flexure of the pipe.

Alternatively, the flexible pipe 5 is of another type, such as a bonded flexible pipe designed, manufactured and used according with the standards API RP 17B (Recommended Practice for Flexible Pipe, 5th edition - March 2014), API 7K (Drilling and Well Servicing Equipment, 6th edition - December 2015), API 16C (Choke and Kill Equipment, 3rd edition - March 2021) and API 17K (Specification for Bonded Flexible Pipe, 3rd edition - August 2017) established by the American Petroleum Institute.

An example of flexible unbonded pipe 5 is depicted in figure 2. In this example, the flexible pipe 5 has an axis A-A' and delimits a central passage 40 for circulation of a fluid, advantageously a petroleum fluid.

The central passage 40 diameter advantageously ranges from 15 cm to 60 cm.

The flexible pipe 5 comprises a plurality of concentric layers around the axis A-A'. The flexible pipe 5 includes at least one first tubular sheath 41 formed of a polymeric material. The first tubular sheath 41 is a pressure sheath.

The flexible pipe 5 further includes at least one layer of tensile armors 42, 43 positioned externally with respect to the first sheath 41.

The flexible pipe 10 further optionally includes an internal carcass 44 positioned inside the pressure sheath 41, and/or a pressure vault 45 inserted between the pressure sheath 41 and the layer(s) of tensile armors 42, 43. It also optionally comprises an external sheath 46, intended to protect the flexible pipe 5.

In a known way, the pressure sheath 41 is intended to tightly confine the fluid transported in the central passage 40. It is formed of a polymeric material, for example based on a polyolefin such as polyethylene, based on a polyamide such as PA11 or PA12, or based on a fluorinated polymer such as polyvinylidene fluoride (PVDF).

The thickness of the pressure sheath 41 is for example comprised between 5 mm and 20 mm.

When present, the carcass 44 is formed for example with a first helicoidally wound profiled interlocked metal strip 48.

The main function of the carcass 44 is to absorb the squeezing radial forces.

The carcass 44 is positioned inside the pressure sheath 20. It is able to come into contact with the fluid circulating in the pressure sheath 41.

The helical winding of the first profiled strip 48 forming the carcass 44 is with a short pitch, i.e. it has a helix angle with an absolute value close to 90° in relation to the axis A-A', typically comprised between 75° and 90°.

When present, the pressure vault 45 is intended to absorb the radial forces related to the pressure prevailing inside the pressure sheath 41. For example it is formed with a helicoidally wound metal profiled wire around the sheath 41. The profiled wire generally has a complex geometry, in particular Z-shaped, T-shaped, U-shaped, K-shaped, X-shaped or I-shaped.

The pressure vault 45 is helicoidally wound with a short pitch around the pressure sheath 41, i.e. with a helix angle of an absolute value close to 90° in relation to the axis A-A', typically comprised between 75° and 90°.

In the example illustrated in figure 2, each layer of armors 42, 43 includes longitudinal armor elements 47 wound with a long pitch around the axis A-A' of the pipe.

The armor elements 47 of a first layer 42 are generally wound according to an opposite angle with respect to the armor elements 47 of a second layer 43. Thus, if the winding angle of the armor elements 47 of the first layer 42 is equal to + α, α being comprised between 25° and 55°, the winding angle of the armor elements 47 of the second layer of armors 43 positioned in contact with the first layer of armors 42 is for example equal to - α.

The armor elements 47 are for example formed with metal wires, in particular steel wires, or with strips in composite material, for example strips reinforced with carbon fibers.

The external sheath 46 is intended to prevent ingress of fluid from the outside of the flexible pipe 10 towards the inside. It is advantageously made in a polymeric material, in particular based on a polyolefin, such as polyethylene, or on in a polyamide, such as PA11 or PA12.

The thickness of the external sheath 46 is for example comprised between 5 mm and 15 mm.

The flexible pipe 5 in some instances comprise accumulated solids 55 present in the central passage 40, in particular between the tubular sheath 41 and the carcass 44 or within the carcass 44.

In the example of figure 2, the accumulated solids 55 for example form an inside layer 49 within the carcass 44. The layer 49 can be solid, similar to a scale deposit or can be powdery, similar to sand.

The accumulated solids 55 result from materials such as scales, sand or sludge. Such material may contain radioactive elements, in particular uranium, thorium and decay products, or radium. These elements are Naturally Occurring Radioactive Material (or "NORM"). These accumulated deposits may also contain other hazardous substances such as mercury or hydrocarbons.

During the recovery of the flexible pipe 5, the accumulated solids 55 may detach from the inner layers of the flexible pipe 5 and flow down to a lower end 60 of the flexible pipe 5 along with the fluid emptying from the central passage 40. In particular, due to bending forces applying on the flexible pipe 5 changing its shape, the inside layer 49, when present, may break into pieces of solids whose maximal dimension may range from 50 micron to 5 cm.

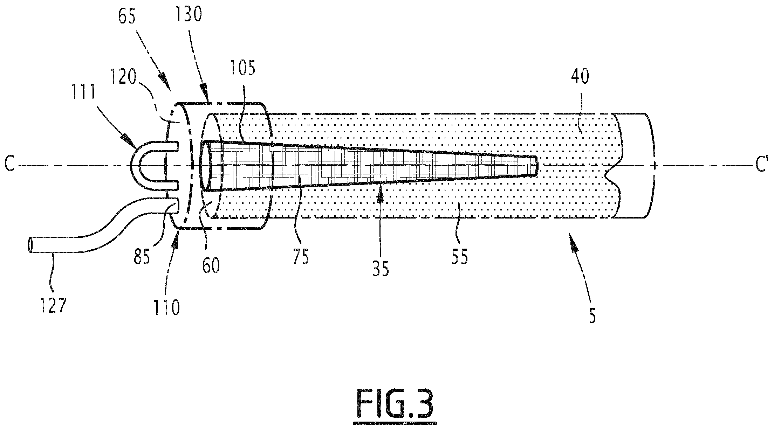

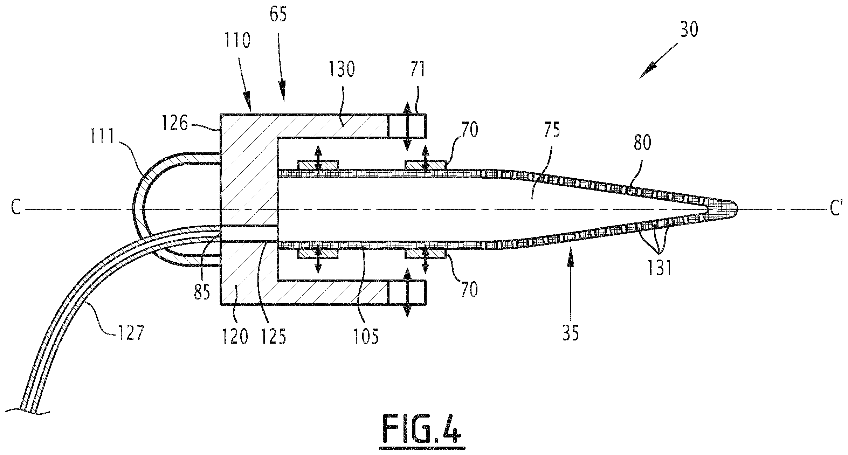

As shown in figures 3 and 4, the solids capturing device 30 is configured to be connected to a lower open end 60 of the flexible pipe 5 before the recovery of the flexible pipe 5. The solids capturing device 30 prevents the accumulated solids 55 from flowing out of the lower end 60 of the flexible pipe 5, while allowing the fluid contained in the flexible pipe 5 to flow out of the central passage 40.

As shown in figures 3 and 4, the solids capturing device 30 comprises a connecting body 65 configured to connect to the flexible pipe 5, and a filtering member 35 borne by the connecting body 65, to allow fluid present in the central passage 40 to flow out of the flexible pipe 5 while retaining accumulated solids 55 in the flexible pipe 5.

The connecting body 65 is configured to be detachably mounted at the lower open end 60 of the flexible pipe 5, advantageously using a ROV. After being mounted at the lower open end 60, the connecting body 65 is thus releasable from the lower open end 60 by detaching it, advantageously using a ROV.

The connecting body 65 has at least one pipe connection member 70, 71 (see figure 4) movable transversely relatively to a central axis C-C' of the connecting body 65, between a released position allowing an engagement of the connecting body 65 with the lower open end 60 of the flexible pipe 5 and a locked position to immobilize the connecting body 65 in engagement with the lower open end 60 of the flexible pipe 5.

The connecting body 65 further defines an inner fluid collection passage 75 to collect fluid from the central passage 40 having passed through the filtering member 35 and at least an evacuation opening 85 to release fluid collected in the inner collection passage 75 out of the solids capturing device 30.

In the example of figures 3 and 4, the connecting body 65 comprises an insertion region 105 to be positioned in the flexible pipe 5, the filtering member 35 being formed or attached at the free end of the insertion region 105. It further comprises a handling region 110 to be positioned outside and partially around the flexible pipe 5 when the insertion region 105 is positioned in the flexible pipe 5.

The insertion region 105 axially protrudes from the handling region 110 along the central axis C-C' of the connection body 65, which is an insertion axis of the connection body 65 in the flexible pipe 5.

The insertion region 105 has a peripheral wall delimiting internally the inner fluid collection passage 75.

The handling region 110 allows direct or indirect handling of the solids capturing device 30 by an operator or a remotely operated vehicle (ROV) for connection with and/or disconnection from the flexible pipe 5.

To facilitate connection and/or disconnection, the handling region 110 advantageously comprises a handling member 111 protruding opposite the insertion region 105. In the example, the handling member 111 is a pad-eye. In variant, the handling member 111 is a hook.

The handling region 110 is configured to close the lower end 60 of the flexible pipe 5. To this end, the handling region 110 comprises a transverse stopper 120 and a peripheral collar 130 axially protruding from the transverse stopper 120 around the insertion region 105. The handling region 110 further defines, within the transverse stopper 120, at least a fluid release passage 125.

The transverse stopper 120 has a cross-section, taken in a plane perpendicular to the central axis C-C', that encompasses a cross-section of the lower end 60 of the flexible pipe 5 in contact with the transverse stopper 120, when the insertion region 105 is positioned in the flexible pipe 5.

The transverse stopper 120 is configured to prevent or at least significantly limit leakage of solids and of liquid which did not pass through the filtering member 35 out of the solids capturing device 30.

The fluid release passage 125 fluidly connects the inner collection passage 75 with the evacuation opening 85, which is here located on an outer transverse face 126 of the transverse stopper 120. An optional flexible duct 127 is connected to the evacuation opening 85. In a variant (not shown), the flexible duct is replaced by an additional filter. The fluid release passage 125 is advantageously cylindrical.

The handling region 110 allows fluid collected from the flexible pipe 5 in the inner collection passage 75 to flow from the inner collection passage 75 to the body of water 10.

The peripheral collar 130 extends around and radially apart from the insertion region 105. It defines, with the insertion region 105, an annular space receiving the layers of the flexible pipe 5 at the lower end 60.

The peripheral collar 130 holds at least one pipe outer connection member 71 that is movable radially towards the central axis C-C', from the released position to the locked position.

The pipe connection member 71 for example comprises a clamp. The clamp has two opposed radially movable clamp members configured to clamp on the outer surface of the flexible pipe 5 and a tightening actuation mechanism configured to be actuated by an operator or a ROV to radially tighten the clamp member.

In addition, or in variant, the connecting body 65 comprises at least one, preferably several pipe inner connection members 70 radially deployable apart from the central axis C-C' from the released position to the locked position. The connection members 70 for example comprise deployable dogs configured to move radially away from the peripheral wall of the insertion region 105 and an actuator which can be operated by an operator or a ROV to deploy the dogs from the release position to the locked position.

In a variant (not shown), the connecting body 65 comprises an external sleeve that through rotation will wedge itself to the flexible pipe structure or again an internal mandrel.

In the locked position, an external surface of each of the pipe inner connection members 70 is in engaging contact with the innermost layer of the flexible pipe 5.

In the released position, the cross section of the insertion region 105 with the pipe inner connection members 70 allows insertion of the latter in the flexible pipe 5.

The pipe connection members 70, 71 are configured so that, in the locking position, the connection between the connecting body 65 and the lower open end 60 of the flexible pipe 5 resists to an axial force equivalent to the pressure differential due to the filter up to several metric tons due to the content of the filter and the pipe.

In the example of figures 3 and 4, the filtering member 35 is here formed at the free end of the connecting body 65 or is attached to the free end of the connecting body 65. It extends axially beyond the insertion region 105 opposite to the handling region 110.

The filtering member 35 comprises a porous filtering wall 80 through which a fluid collected in the inner collection passage 75 has flowed.

The porous filtering wall 80 is for example made of a pierced wall, of a mesh and/or of a porous material. In the example of figure 3, the porous filtering wall 80 is advantageously integral with the peripheral wall of the insertion region 105.

The porous filtering wall 80 defines filtering through openings 131 configured to allow a flow of the fluid contained in the central passage 40 of the flexible pipe 5, the fluid being advantageously water and/or residues of a fluid that was produced at the offshore production site.

The filtering through openings 131 are configured to prevent accumulated solids 55 to pass through the porous filtering wall 80.

Advantageously, the maximal transverse dimension of the filtering through openings is smaller than 250 µm, preferably comprised between 20 µm and 200 µm. Alternatively, the mesh sizes can be such that the porous filtering wall 80 has a different mesh size than the final filter to ensure a staged filtering and limit the risk of clogging.

The fluid flow through the porous filtering wall 80 is of at least 20 L/min, in particular between 20 L/min and 200 L/min, advantageously of at least 100 L/min.

In the example of figure 3, the porous filtering wall 80 is tapered away from the connecting body 65.

The porous filtering wall 80 is rigid. "Rigid" means here that the porous filtering wall 80 does not deform under its own weight.

A flexible pipe 5 retrieving method using the first solids capturing device 30 according to the invention will now be described.

Initially, the lower end 60 of the flexible pipe 5 is disconnected from other equipment as for example a manifold, a production equipment or another flexible pipe through disconnection of the end-connector/end-fitting or through cut end-termination, for example using an ROV provided with a cutter, a shear or diamond wire saw. The solids capturing device 30 is transported to the vicinity of the open end 60, typically the lower open end, of the flexible pipe 5 and then, can be connected either to the open cut flexible pipe end or alternatively through the existing flexible pipe end-fitting or connector. An operator or a ROV holds the solids capturing device 30. The pipe connection members 70, 71 are in the released position.

The connecting body 65, handled by the operator or the ROV through the handling member 111, is then engaged on the open end 60 of the flexible pipe 5. The filtering member 35 and thereafter, the insertion region 105 are inserted in the central passage 40 of the flexible pipe 5 until the transverse stopper 120 contacts the lower open end 60 of the flexible pipe 5.

The layers of the flexible pipe 5 may be positioned in the annular space between the insertion region 105 and the peripheral collar 130.

Last, the pipe connection members 70, 71 are passed from the released position to the locked position, via an actuation of the actuation mechanism by an operator or/and by the ROV. The solids capturing device 30 is then assembled on the flexible pipe 5 and closes the lower open end 60.

Once the solids capturing device 30 is assembled with the flexible pipe 5, the surface pipe recovery device 17 progressively lifts the flexible pipe 5 above the hull 15 and redirects the upper end region of the flexible pipe 5 towards the pipe processing stage 18.

As the flexible pipe 5 is lifted, the fluid filling the central passage 40 spontaneously flows from the central passage 40 of the flexible pipe 5 to the inner collection passage 75 through the porous filtering wall 80 and then to the body of water 10, successively through the fluid release passage 125 and the evacuation opening 85.

Alternatively, once the flexible pipe 5 has reached the hull 15, the fluid filling the central passage 40 may be flushed using a vessel deck pump to push clean fluid (e.g.: water) to flow from the central passage 40 of the flexible pipe 5 to the inner collection passage 75 through the porous filtering wall 80 and then to the body of water 10, successively through the fluid release passage 125 and the evacuation opening 85.

In an alternative not described in this document, the flexible pipe 5 can be flushed using a subsea floor installed pump to push clean fluid (e.g.: water) to flow from the central passage 40 of the flexible pipe 5 to the inner collection passage 75 through the porous filtering wall 80 and then to the body of water 10, successively through the fluid release passage 125 and the evacuation opening 85.

No fluid or almost no fluid (for example less than 10% in volume of the fluid) can follow another pathway.

The accumulated solids 55 potentially released from the inner layers of the flexible pipe 5 are retained in the flexible pipe 5 thanks to the porous filtering wall 80.

The solids capturing device 30 is jointly lifted with the lower open end 60 of the flexible pipe 5.

At the pipe processing stage 18, the recovered flexible pipe 5 is cut in successive pipe sections which may be collected in containers.

In a variant, the collected pipe sections are directly dropped off on the deck 16 of the vessel 1 and the open ends are securely closed with adequate solutions to avoid possible contamination of the deck and of the operators.

Alternatively, during this pipe processing stage 18, the recovered flexible pipe 5 can be recovered on reels or baskets.

The pipe sections to which the solids capturing device 30 is assembled contains accumulated solids 55 retained by the filtering member 35. This pipe section is also collected in a container, reel or basket and the open ends are advantageously securely closed.

The solids capturing device 30 may then be disconnected by passing the pipe connection members 70, 71 to their released position and can be reused.

Thanks to the provision of the solids capturing device 30, no or little solid is dispersed in the body of water 10 while retrieving the flexible pipe 5 and no accumulation of released solids occurs where the lower end 60 of the flexible pipe laid on the bottom of the body of water 10. The solids are collected in the flexible pipe 5 in which they can be transported, processed and disposed of depending on their composition.

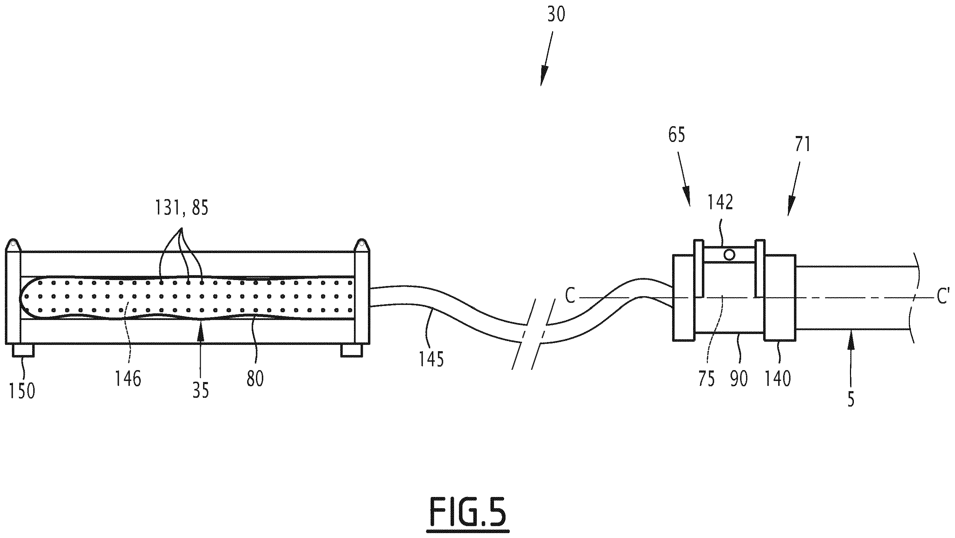

A second solids capturing device 30 according to the invention is shown in figure 5.

Contrary to the example of figures 3 and 4, the connecting body 65 does not comprise an insertion region 105 to be inserted in the flexible pipe 5

The connecting body 65 comprises an annular support member 90, to engage around the outer surface of the flexible pipe 5 open end 60. The support member 90 defines the inner collection passage 75.

In this example, the connecting body 65 comprises an outer pipe connection member 71 which forms a clamp around the support member 90 (here represented in the locked position).

The clamp can have two opposed radially movable clamp members 140 configured to clamp the connecting body 65 on the outer surface of the flexible pipe 5 and a tightening actuation mechanism 142 configured to be actuated by an operator or a ROV to radially tighten the clamp members 140.

The clamp members 140 are movable radially towards the central axis C-C' from the released position to the locked position.

In the locked position, the clamp encloses the support member 90 such that an inner surface of the support member 90 is in contact with the external surface 100 of the outermost layer of the flexible pipe 5, the connection between the support member 90 and the flexible pipe 5 being tight.

In this example, the filtering member 35 is located downstream of the inner collection passage 75. The inner collection passage 75 thus collects fluid, which is to flow through the porous filtering wall 80.

The filtration through openings 131 of the porous wall 80 form evacuation openings 85 from which fluid is evacuated out of the solids capturing device 30.

The filtering member 35 is shown here separated from the connecting body 65 and is connected to the inner collection passage 75 of the connecting body 65 via an intermediate duct 145. The filtering member 35 is advantageously received in a holding open framework 150.

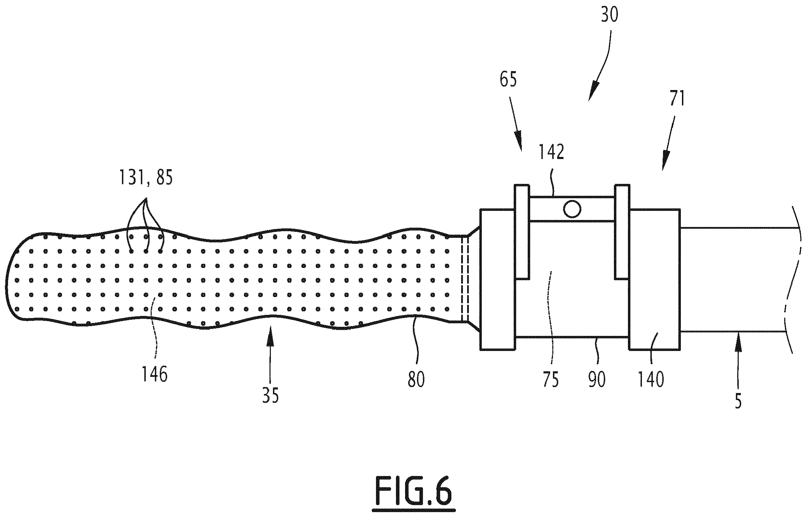

Alternatively, the filtering member 35 can be rigidly connected to the inner collection passage 75 of the connecting body 65, as it will be described in relation to figure 6.

As shown in figure 5, the porous filtering wall 80 is bag-shaped and defines a inner volume 146.

The inner volume 146 is chosen according to the length of the flexible pipe 5 and/or to a thickness of a solid deposit in the flexible pipe 5. Advantageously, the inner volume 146 is at least equal to 1 m³, and is for example comprised between 0.5 m³ and 5 m³.

The filtering member 35 is advantageously made of a deformable flexible material. For example, the filtering member 35 is made of a metallic screen or mesh, or alternatively a fiber mesh (wire, plastic or natural fibers). The filtering member can be built with one filtering member or a series of filtering members so that so provide a staged filtering and reduce the risk of blockages.

The intermediate duct 145 is preferably flexible. It has a length greater than 50 cm and generally comprised between 1 m and 10 m. The intermediate duct 145 can be made sufficiently strong to be able to hold the framework 150 during the recovery to the vessel. Alternatively, the intermediate duct 145 can be sealed either at the end connected to the connected member 65 or at the end connected to the filtering member 35, preferably the the end connected to the filtering member 35, prior to being disconnected from the framework 150. In this case, the framework 150 would be recovered by vessel 1 as a separate lift.

The intermediate duct 145 can be equipped with one or more isolation valve to allow its safe disconnection either subsea or topside.

The filtering member 35 is totally or at least partially inserted in the framework 150. The framework 150 allows a safe lifting and handling of the filtering member 35, even when the inner volume 146 is completely filled.

The framework 150 is advantageously stackable. It preferentially includes tagging points to tag information on the type of material handled in the filtering member 35.

The framework 150 advantageously comprises forklift pockets to allow its handling by a forklift, bumpers for landing and/or a sling pennant configured for handling by a lifting device such as a crane.

In this second solids capturing device 30 according to the invention, fluid contained in the flexible pipe 5 flows from the central passage 40 of the flexible pipe 5 through the inner collection passage 75 within the support member 90, then through the duct 145, and finally, through the evacuation openings 85 defined in the porous filtering wall 80.

The accumulated solids 55 are retained in the inner volume 146 defined by the porous filtering wall 80.

A third solids capturing device 30 according to the invention is shown in figure 6.

The solids capturing device 30 of figure 6 differs from the one of figure 5 in that the filtering member 35 is held directly by the connecting body 65 and is not connected to it via a duct 145.

In the example of figure 6, the filtering member 35 has a pocket cylindrical shape.

Contrary to the solids capturing device 30 of figure 4, no framework is provided to hold the filtering member 35.

Generally speaking, the solids capturing devices 30 according to the invention close the open lower end 60 of a flexible pipe 5 without preventing the evacuation a fluid filling the flexible pipe 5 into the body of water 10. Consequently, the solids capturing devices 30 according to the invention prevent solids dispersion in the body of water 10 while allowing an easy lifting of the flexible pipe 5. Indeed, contrary to a fluid impermeable stopper, the fluid column associated with the flexible pipe 5 (which can have a length greater than 100 meters) is progressively evacuated out of the flexible pipe 5 while the flexible pipe 5 is lifted.

The handling of the solids that have been collected by the filtering member 35 is carried out with limited risks, in particular of exposure to radioactive materials. When the first solids capturing device 30 according to the invention is used, the potentially radioactive solids are enclosed in the flexible pipe 5 whose polymeric and metallic layers form an effective barrier.

The solids capturing device 30 is also easy to assemble with the flexible pipe 5 and adaptable to a range of flexible pipes 5.

## Claims

1. Solids capturing device (30) to be mounted at an open end (60) of a fluid transportation flexible pipe (5) immersed in a body of water (10), **characterized by**:
- a connecting body (65) configured to be detachably mounted at the open end (60) of the flexible pipe (5), the connecting body (65) having at least a pipe connection member (70, 71) movable transversely relatively to a central axis (C-C') of the connecting body (65) between a released position, allowing an engagement of the connecting body (65) with the open end (60) of the flexible pipe (5) and a locked position, to immobilize the connecting body (65) in engagement with the open end (60) of the flexible pipe (5), the connecting body (65) defining an inner collection passage (75) to collect fluid to be released from the flexible pipe (5),
- a filtering member (35) held by the connecting body (65) or connected to the connecting body (65), the filtering member (35) comprising a porous filtering wall (80) through which the fluid collected in the inner collection passage (75) has flowed or is to flow,
- the connecting body (65) and/or the filtering member (35) defining at least an evacuation opening (85) to release fluid collected in the inner collection passage (75) having flowed through the porous filtering wall (80).

2. Solids capturing device (30) according to claim 1, wherein the connecting body (65) comprises an insertion region (105) to be positioned in the flexible pipe (5), the inner collection passage (75) being at least partially positioned within the insertion region (105) and being connected to the evacuation opening (85), the porous filtering wall (80) of the filtering member (35) being formed on the insertion region (105) or being borne by the insertion region (105).

3. Solids capturing device (30) according to claim 2, wherein the connecting body (65) comprises a handling region (110) protruding from a downstream end of the insertion region (105), the handing region (110) being intended to close the open end (60) of the flexible pipe (5) when the insertion region (105) is positioned in the flexible pipe (5), the handling region (110) defining at least a fluid release passage (125) fluidly connected to the evacuation opening (85).

4. Solids capturing device (30) according to claim 3, wherein the handling region (110) comprises at least a transverse stopper (120) located at an end of the insertion region (105) and a peripheral collar (130) protruding from the transverse stopper (120), around and radially apart from the insertion region (105).

5. Solids capturing device (30) according to claim 4, wherein the peripheral collar (130) comprises at least one pipe connection member (71), the at least one pipe connection member (71) borne by the peripheral collar (130) being movable radially towards the central axis (C-C') from the released position to the locked position.

6. Solids capturing device (30) according to any of claims 3 to 5, wherein the handling region (110) comprises a handling member (111), in particular a pad-eye or a hook, the handling member (111) protruding opposite the insertion region (105).

7. Solids capturing device (30) according to any of claims 2 to 6, wherein the insertion region (105) bears at least one connection member (70), the at least one pipe connection member (70) borne by the insertion region (105) being radially deployable apart from the central axis (C-C') from the released position to the locked position.

8. Solids capturing device (30) according to any of claims 1 to 7, wherein the filtering member (35) comprises a bag shaped porous wall (180) held or connected to the connecting body (65), the inner collection passage (75) emerging in an inner volume defined by the bag shaped porous wall (180).

9. Solids capturing device (30) according to any of claims 1 to 8, wherein the solids capturing device (30) comprises a duct (145) connecting the inner collection passage (75) to the filtering member (35).

10. Solids capturing device (30) according to any of claims 1 to 9, wherein the filtering porous wall (80) of the filtering member (35) is made at least partly of flexible material and the solids capturing device (30) comprises a framework (150) receiving the filtering member (35).

11. Solids capturing device (30) according to any of claims 1 to 10 wherein the connecting body (65) has at least two opposite pipe connection members (70, 71) forming a clamp to connect around the pipe.

12. Assembly of a flexible pipe (5) and a solids capturing device (30) according to any of claims 1 to 11, the connecting body (65) being mounted at an open end (60) of the flexible pipe (5), the at least one connection member (70, 71) being in the locked position.

13. Flexible pipe (5) recovery method to recover a fluid transportation flexible pipe (5) immersed in a body of water (10), the flexible pipe (5) having an open end (60), the method comprising:
- carrying a solids capturing device (30) having a connecting body (65) configured to be detachably mounted at the open end (60) of the flexible pipe, the connecting body (65) defining an inner collection passage (75) to collect fluid to be released from the flexible pipe (5), the solids capturing device (30) having a filtering member (35) held by the connecting body (65) or connected to the connecting body (65), the filtering member (35) comprising a porous filtering wall (80) through which the fluid collected in the inner collection passage (75) has flowed or is to flow, the connecting body (65) and/or the filtering member (35) defining at least an evacuation opening (85) to release fluid collected in the inner collection passage (75) having flowed through the porous filtering wall (80), in the vicinity of the open end (60); the recovery method comprising:
- connecting the connecting body (65) to the open end (60) of the flexible pipe;
- lifting the flexible pipe (5) with a surface recovery device (17);
- letting a fluid filling the flexible pipe (5) flow from the flexible pipe (5) through the inner collection passage (75) and the evacuation opening (85) and collecting solids contained in the fluid on the porous filtering wall (80).

14. Recovery method according to claim 13, wherein connecting the connecting body (65) to the end of the flexible pipe comprises moving at least a pipe connection member (70, 71) transversely relatively to a central axis (C-C') of the connecting body (65) from a released position allowing an engagement of the connecting body (65) with the open end (60) of the flexible pipe to a locked position to immobilize the connecting body (65) in engagement with the open end (60) of the flexible pipe.
